Europäisches Patentamt

European Patent Office

Office européen des brevets

(19)

(11) Veröffentlichungsnummer: **0 326 904 B1**

(12) **EUROPÄISCHE PATENTSCHRIFT**

(45) Veröffentlichungstag der Patentschrift: **13.10.93**

(51) Int. Cl.⁵: **G11B 5/31**, G11B 5/39

(21) Anmeldenummer: **89101140.5**

(22) Anmeldetag: **23.01.89**

(54) Dünnfilm-Magnetkopf mit integriertem magneto-resistiven Sensor.

(30) Priorität: **04.02.88 DE 3803327**

(43) Veröffentlichungstag der Anmeldung:
**09.08.89 Patentblatt 89/32**

(45) Bekanntmachung des Hinweises auf die
Patenterteilung:
**13.10.93 Patentblatt 93/41**

(84) Benannte Vertragsstaaten:
**AT CH DE FR GB IT LI NL**

(56) Entgegenhaltungen:
**EP-A- 0 021 392        EP-A- 0 101 352
EP-A- 0 232 505        DE-A- 3 545 361
US-A- 4 385 334        US-A- 4 575 777**

**PATENT ABSTRACTS OF JAPAN, Band 8, Nr.
192 (P-298)[1629], 4. September 1984; & JP-
A-59 79 411**

**PATENT ABSTRACTS OF JAPAN, Band 1, Nr.
76, 21. Juli 1977, Seite 1039 E 77; & JP-A-52
11 921**

(73) Patentinhaber: **SIEMENS AKTIENGESELL-
SCHAFT
Wittelsbacherplatz 2
D-80312 München(DE)**

(72) Erfinder: **Schewe, Herbert, Dr.
Haydnstrasse 58
D-8522 Herzogenaurach(DE)**

## Beschreibung

Die Erfindung bezieht sich auf einen Dünnfilm-Magnetkopf mit schichtweisem Aufbau. Dieser Magnetkopf ist über einer Datenspur eines Aufzeichnungsmedium zu führen und enthält einen den magnetischen Fluß führenden, ringkopfähnlichen magnetischen Leitkörper mit zwei Magnetschenkeln. Diese Magnetschenkeln bilden mit dem Aufzeichnungsmedium zugewandten Polstücken Magnetpole aus, welche bezüglich der relativen Bewegungsrichtung von Magnetkopf und Aufzeichnungsmedium gesehen hintereinander angeordnet und durch einen Spalt vorbestimmter Weite getrennt sind, und begrenzen außerhalb des Bereichs ihrer Polstücke einen Zwischenraum, durch welchen sich die Windungen einer Schreibspule erstrecken. Außerdem weist der Magnetkopf einen magneto-resistiven Sensor zur alleinigen Ausübung der Funktion des Lesens von in die Datenspur eingeschriebenen Informationen auf, der in dem Spalt zwischen den Polstücken der Magnetschenkel angeordnet ist und eine Ausdehnung quer zur relativen Bewegungsrichtung hat, die kleiner ist als die entsprechende Ausdehnung jedes benachbarten Polstücks. Ein entsprechender Magnetkopf ist bekannt von der "International Magnetics Conference (INTERMAG)", Hamburg (DE), 9.-13.4.1984, Beitrag EP-11 der Autoren G.S. Mowry et al: "Electrical Characteristics of Comparable Inductive and Magnetoresistive Thin Film Heads".

Datenspeichereinrichtungen, die entweder nach dem Prinzip einer longitudinalen (horizontalen) Magnetisierung oder nach dem Prinzip einer senkrechten (vertikalen) Magnetisierung arbeiten, sind allgemein bekannt. Die Unterschiede der beiden Magnetisierungsprinzipien sind z.B. gegenübergestellt in "IEEE Transactions on Magnetics", Vol. MAG-16, No. 1, Januar 1980, Seiten 71 bis 76 oder Vol. MAG-20, No. 5, September 1984, Seiten 657 bis 662 und 675 bis 680). Für diese Magnetisierungsarten zu verwendende Magnetköpfe weisen im allgemeinen zur Führung des magnetischen Flusses einen Leitkörper aus magnetischem Material auf, der mit zwei Magnetschenkeln eine Gestalt ähnlich einer Ringform hat. Diese Magnetschenkel bilden mit ihren dem Aufzeichnungsmedium zugewandten Endstücken Magnetpole aus, die in relativer Bewegungsrichtung des Kopfes bezüglich des Aufzeichnungsmediums gesehen hintereinande angeordnet sind, wobei ein Spalt vorbestimmter Weite ausgebildet. Außerdem begrenzen die Magnetschenkel einen Zwischenraum, der außerhalb des Bereichs der Endstücke aufgrund einer Vergrößerung ihres gegenseitigen Abstandes entsprechend erweitert ist. Durch diesen Zwischenraum erstrecken sich die Windungen einer Schreib- oder Lesespule.

Ein entsprechender Aufbau liegt auch dem aus dem eingangs genannten Beitrag der INTERMAG-Konferenz bekannten Dünnfilm-Magnetkopf zugrunde. Bei diesem bekannten Magnetkopf, der für das Prinzip einer longitudinalen Magnetisierung ausgelegt ist, sollen mit den beiden Magnetschenkeln seines magnetischen Leitkörpers lediglich die Datenspuren in dem Aufzeichnungsmedium induktiv beschrieben werden. Dabei ist der bezüglich der relativen Bewegungsrichtung gesehen vorlaufende Magnetpol des Leitkörpers von einem ferromagnetischen Substrat mit verhältnismäßig großer longitudinaler Ausdehung gebildet. Die Schreibbreite W dieses Kopfes ist durch die entsprechende Breite des Magnetpoles des nachlaufenden Magnetschenkels bestimmt. Zum Lesen von in das Aufzeichnungsmedium eingeschriebenen Informationen dient ein besonderer magneto-resistiver Sensor, der in dem Spalt zwischen den Endstücken der beiden Magnetschenkel des magnetischen Leitkörpers angeordnet ist. Dieser Sensor hat eine Ausdehnung quer zur Bewegungsrichtung, die geringer als die durch den nachlaufenden Magnetpol bestimmte Schreibbreite W ist. Der bekannte Magnetkopf legt somit beim Schreiben induktiv eine breitere Spur fest und liest mit dem integrierten, schmäleren magneto-resistiven Sensor eine Spur mit entsprechend geringerer Breite aus. Hiermit lassen sich Lesefehler vermeiden, die sich dadurch ergeben können, daß im Randbereich von Datenspuren inselförmig Datenreste aus unterschiedlichen Überschreibungsläufen vorhanden sein können, die beim Lesen dieser Spur bei nicht genügend unterdrückter Lesefähigkeit der Randbereiche miterfaßt werden.

Für eine vertikale Aufzeichnung ist jedoch der bekannte Magnetkopf mit integriertem magneto-resistiven Sensor weniger geeignet, da beim Schreiben mit dem in Bewegungsrichtung gesehen nachlaufenden Magnetpol in dieser Richtung nur ein verhältnismäßig breiter magnetischer Übergang in einer CoCr-Schicht eines entsprechenden Aufzeichnungsmediums erzeugt werden kann. Mit derartig weiten Übergängen sind jedoch hohe Speicher- bzw. Flußwechseldichten von z.B. 50 kfci (kilo flux changes per inch) oder größer, wie sie für nach dem vertikalen Magnetisierungsprinzip arbeitende Datenspeichereinrichtungen angestrebt werden, nur schwer zu realisieren.

Ein ähnlicher Aufbau eines Magnetkopfes wie der des aus dem genannten Beitrag der INTERMAG-Konferenz zu entnehmenden ist auch aus der EP-A-0 021 392 bekannt. Dieser Magnetkopf weist ebenfalls ein als vorlaufender Magnetschenkel dienendes, verhältnismäßig breites Substrat aus ferromagnetischem Material auf. Zusammen mit einem nachlaufenden, dünnen Magnetschenkel ist ein Spalt ausgebildet, in dem sich ein magneto-resistiver Sensor befindet. Zusätzlich sind in diesem Spalt ferromagnetische Teile angeordnet, um mit einer verhältnismäßig großen Spaltweite schreiben und mit einer vergleichsweise geringeren Spaltweite auslesen zu können. Diese zusätzlichen ferromagnetischen Teile wirken zugleich als ein Bias-Element für den magneto-resistiven Sensor. Die erwähnten Schwierigkeiten hinsichtlich einer vertikalen Magnetisierung treten auch hier auf.

Aufgabe der vorliegenden Erfindung ist es deshalb, den nicht nur Dünnfilm-Teile aufweisenden Magnetkopf der eingangs genannten Art dahingehend auszugestalten, daß mit ihm eine vertikale Magnetisierung mit hohen Flußwechseldichten bei gleichzeitig verhältnismäßig hohem Wirkungsgrad der Schreib- und Lesefunktion zu gewährleisten ist.

Diese Aufgabe wird erfindungsgemäß dadurch gelöst,

- daß der magnetische Leitkörper als Dünnfilm-Struktur auf einem nicht-magnetischen Substrat ausgebildet ist,
- daß der Magnetpol des in relativer Bewegungsrichtung gesehen vorlaufenden Magnetschenkels eine größere Breite quer zur Bewegungsrichtung und eine größere Schichtdicke in Bewegungsrichtung hat als der Magnetpol des nachlaufenden Magnetschenkels,
- daß für eine senkrechte (vertikale) Datenaufzeichnung während der Schreibfunktion der Magnetpol des vorlaufenden Magnetschenkels und der Magnetpol des nachlaufenden Magnetschenkels ein unterschiedliches magnetisches Verhalten aufweisen, wobei zumindest das Polstück des nachlaufenden Magnetschenkels wenigstens teilweise magnetisch gesättigt ist,

und

- daß der magneto-resistive Sensor mit seitlich aus dem Spalt herausführenden Zuleitungen versehen ist.

Die Auswahl der Materialien für die beiden Magnetschenkel erfolgt dabei unter an sich bekannten Gesichtspunkten (vgl. z.B. EP-A-0 166 818 oder EP-A-0 232 505). Es läßt sich so erreichen, daß beim Schreiben das von dem nachlaufenden Magnetpol erzeugte vertikale Magnetfeld stets kleiner als die vertikale Koerzitivfeldstärke des für die Speicherschicht des Aufzeichnungsmediums gewählten Materials ist. Damit ist der nachlaufende Magnetpol zumindest teilweise gesättigt und somit praktisch unwirksam. Daher schreibt der Kopf im wesentlichen nur mit seinem vorlaufenden Magnetpol, wobei vorteilhaft ein sehr steiles Schreibprofil zwischen den beiden Magnetpolen ausgebildet wird. Eine eine entsprechende Schreibfunktion aufübender Dünnfilm-Magnetkopf ist der vorstehend erwähnten EP-A-0 232 505 bzw. der teilweise korrespondierenden DE-A-35 45 361 zu entnehmen. Mit diesem Magnetkopf soll auch ausgelesen werden. Merkmale dieses Dünnfilm-Magnetkopfes lassen sich jedoch nicht ohne weiteres mit einem Aufbau eines Magnetkopfes gemäß dem genannten Beitrag der INTERMAG-Konferenz oder gemäß der EP-A-0 021 392 kombinieren, da dort eine magnetische Sättigung des jeweils als vorlaufender Magnetschenkel dienenden, verhältnismäßig dicken ferromagnetischen Substrates mit Hilfe einer Dünnfilm-Schreibspule nicht möglich ist.

Bei dem Dünnfilm-Magnetkopf gemäß der Erfindung wird die Lesefunktion ausschließlich mit dem magneto-resistiven Sensor in einer Weise ausgeübt, wie sie z.B. für eine longitudinale Aufzeichnung mit geringer Spurbreite aus der DE-A-33 42 511 an sich bekannt ist.

Mit der vorbestimmten Querausdehnung des magneto-resistiven Sensors im Vergleich zu den beiden benachbarten Magnetpolen wird vorteilhaft bei dem erfindungsgemäßen Magnetkopf ein unerwünschtes Nebenlesen vermieden.

Der erfindungsgemäße Magnetkopf läßt sich darüber hinaus nach bekannten Verfahren der Dünnschicht- bzw. -filmtechnik auf verhältnismäßig einfache Weise fertigen.

Vorteilhafte Ausgestaltungen des erfindungsgemäßen Magnetkopfes gehen aus den Unteransprüchen hervor.

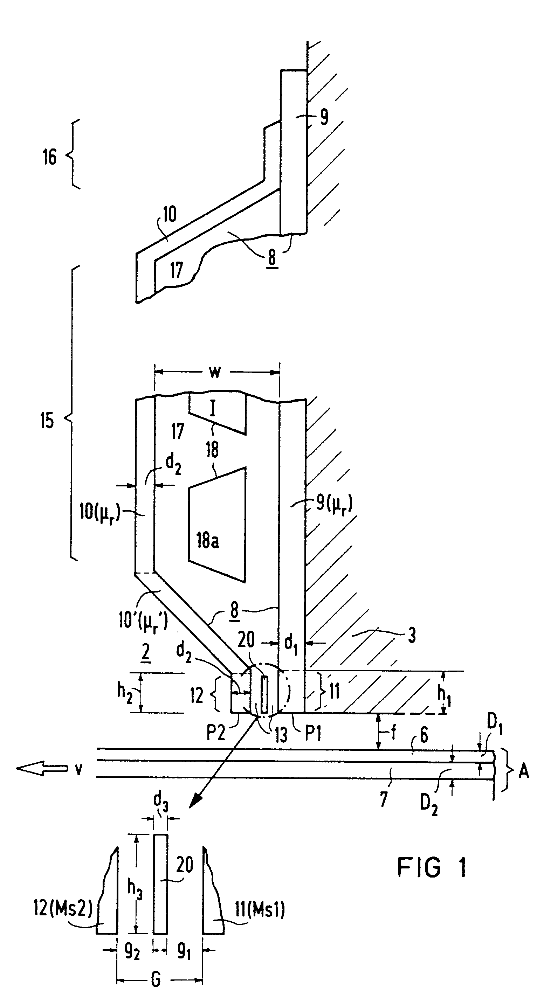

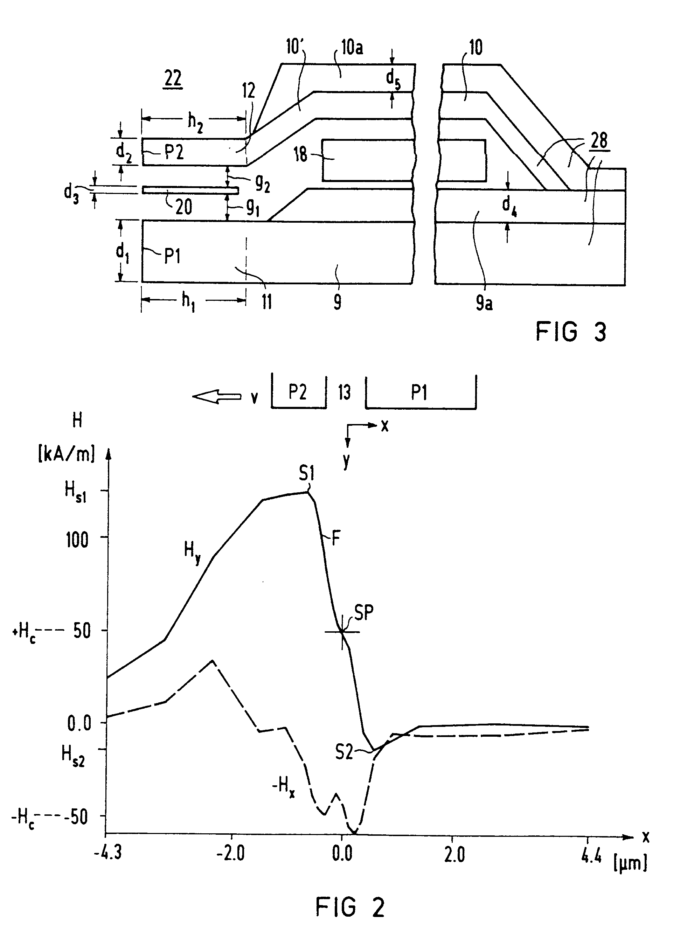

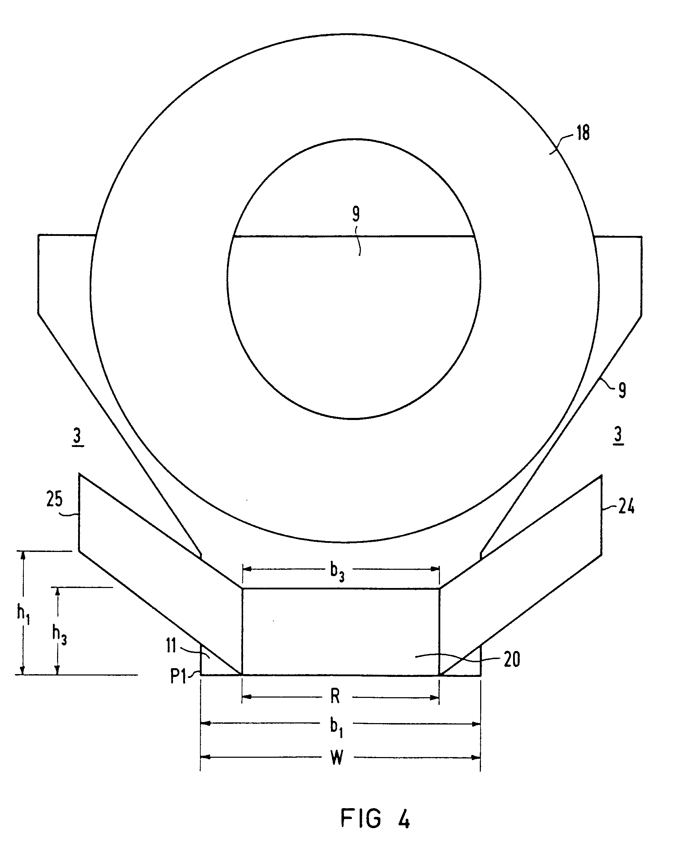

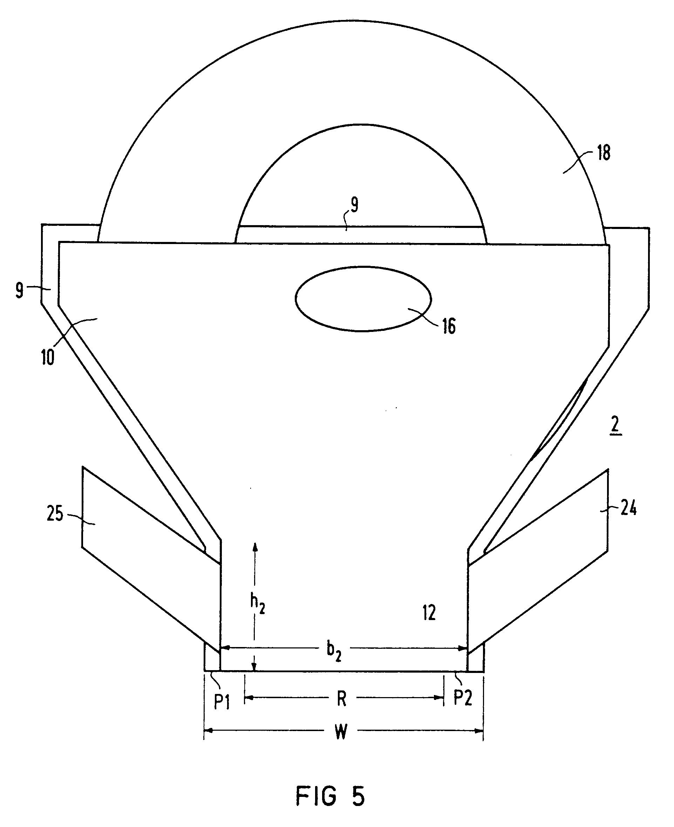

Zur weiteren Erläuterung der Erfindung wird auf die Zeichnung Bezug genommen, in deren Figur 1 ein Ausführungsbeispiel einer Speichereinrichtung mit einem erfindungsgemäßen Magnetkopf schematisch veranschaulicht ist. Figur 2 zeigt in einem Diagramm die mit einem konkreten Magnetkopf gemäß Figur 1 zu erzeugenden Magnetfeldkomponenten. Aus Figur 3 geht eine weitere Ausführungsform eines erfindugnsgemäßen Magnetkopfes hervor. In den Figuren 4 und 5 sind zwei Schritte zum Aufbau eines erfindungsgemäßen Magnetkopfes schematisch veranschaulicht. In den Figuren sind sich entsprechende Teile mit denselben Bezugzeichen versehen.

Bei dem in Figur 1 nur teilweise als Längsschnitt dargestellten Magnetkopf einer Datenspeichereinrichtung wird von an sich bekannten, ringkopfähnlichen Ausführungsformen mit schichtweisem Aufbau ausgegangen, wie sie für das Prinzip der senkrechten (vertikalen) Magnetisierung entwickelt worden sind (vgl. z.B. die genannte EP-A-0 232 505). Mit dem allgemein mit 2 bezeichneten Magnetkopf soll sowohl eine Schreib- als auch eine Lese-Funktion auszuüben sein. Dieser Kopf befindet sich auf einer Flachseite eines nicht-magnetischen Substrates 3, das vorzugsweise die Rückseite eines gebräuchlichen, auch als Flugkörper

EP 0 326 904 B1

bezeichneten Elementes bildet und das in der Figur nicht weiter ausgeführt ist. Der Magnetkopf ist relativ zu einem an sich bekannten Aufzeichnungsmedium A in geringer Flughöhe f aerodynamisch zu führen, wobei die relative Bewegungsrichtung des Aufzeichnungsmediums bezüglich des Magnetkopfes durch eine mit v bezeichnete gepfeilte Linie angedeutet ist. Die Flughöhe, die sich zwischen der zu mindestens einer Flugkufe gestalteten, dem Aufzeichnungsmedium A zugewandten Unterseite des Kopfes 2 und dem Aufzeichnungsmedium einstellt, beträgt beispielsweise nur einige Zehntel $\mu$m. Das Aufzeichnungsmedium A, z.B. Magnetspeicherplatte, weist eine Speicherschicht 6 auf, die vertikal (senkrecht) orientiert ist und eine vorbestimmte Dicke $D_1$ hat. Das Material der Speicherschicht, für das beispielsweise eine CoCr-Legierung gewählt wird, soll dabei einen vorbestimmten Wert der (senkrechten) Koerzitivfeldstärke $H_c$ von beispielsweise mehr als 20 kA/m, vorzugsweise mehr als 40 kA/m aufweisen (vgl. z.B. EP-A-0 120 413 oder EP-A-0 054 269). Die Speicherschicht 6 kann außerdem vorteilhaft noch auf mindestens einer weiteren, weichmagnetischen Schicht, z.B. aus einer speziellen NiFe-Legierung oder aus amorphem CoZr oder CoHf mit gegebenenfalls noch ternären Zusätzen angeordnet sein. Diese Unterschicht ist in der Figur mit 7 bezeichnet und hat eine Dicke $D_2$.

Der Magnetkopf 2 enthält einen den Magnetfluß führenden, ringkopfähnlichen magnetischen Leitkörper 8 mit zwei Magnetschenkeln 9 und 10. Diese Schenkel sind weitgehend und insbesondere mit ihren dem Aufzeichnungsmedium zugewandten, Magnetpole P1 bzw. P2 ausbildenden Pol- oder Endstücken 11 bzw. 12 zumindest annähernd senkrecht zur Oberfläche des Aufzeichnungsmediums A ausgerichtet. Unter den Polstücken wird dabei jeweils der einen Magnetpol ausbildende Teil des entsprechenden Magnetschenkels verstanden, der parallel zu dem jeweils benachbarten Teil des anderen Magnetschenkels verläuft, eine zumindest weitgehend einheitliche Querausdehnung bzw. Dicke aufweist oder der durch keine weiteren Schichten verstärkt ist. Die Polstücke 11 und 12 mit ihrer vertikalen Ausdehnung $h_1 = h_2$ sind durch einen Luftspalt 13 räumlich getrennt, der im Bereich der Magnetpole P1 und P2 eine vorteilhaft geringe longitudinale, d.h. in Bewegungsrichtung v weisende Weite G von unter 1,5 $\mu$m, vorzugsweise unter 0,8 $\mu$m hat. In einem mittleren Bereich 15 des magnetischen Leitkörpers 8 ist der Abstand zwischen den beiden Magnetschenkeln 9 und 10 gegenüber dieser Spaltweite G erweitert, indem z.B. der hinsichtlich der Bewegungsrichtung v rückwärtige, d.h. nachlaufende Magnetschenkel 10 auf eine größere Weite w bezüglich des vorderen, eben ausgebildet und dem Substrat 3 zugewandten, vorlaufenden Magnetschenkels 9 führt. Außerhalb dieses Bereichs 15 ist auf der dem Aufzeichnungsmedium A abgewandten Seite des magnetischen Leitkörpers 8 der Magnetschenkel 10 in bekannter Weise in einem Verbindungsbereich 16 an den Magnetschenkel 9 angefügt, so daß sich damit die ringkopfähnliche Gestalt des Leitkörpers 8 ergibt.

Durch den zwischen den beiden Magnetschenkeln 9 und 10 in dem mittleren Bereich 15 ausgebildeten Zwischenraum 17 erstreckt sich mindestens eine Wicklung einer Spule 18, die erfindungsgemäß nur als Schreibspule dient. Diese in der Figur nur mit einer einzigen Lage 18a angedeutete Wicklung kann auch mehrlagig ausgebildet sein und weist dabei im allgemeinen eine verhältnismäßig geringe Anzahl von Windungen auf, die im wesentlichen durch die elektrischen Daten eines angeschlossenen Schreibverstärkers bestimmt sind. Durch sie kann ein verhältnismäßig großer Schreibstrom I fließen.

Die beiden Magnetschenkel 9 und 10 des Magnetkopfes 2 sind jeweils durch mindestens eine magnetische Schicht mit einer Schichtdicke $d_1$ bzw. $d_2$ ausgebildet. Unter der jeweiligen Schichtdicke wird dabei die an dem jeweiligen Polstück 11 bzw. 12 zu messende Ausdehung der entsprechenden Schicht in Bewegungsrichtung v verstanden.

Wie ferner aus Figur 1 hervorgeht, ist bei dem erfindungsgemäßen Magnetkopf 2 in dem Spalt 13 in bekannter Weise (vgl. den eingangs genannten Beitrag der INTERMAG-Konferenz) ein magnetoresistiver Sensor 20 angeordnet. Hierfür geeignete Elemente sind z.B. aus der genannten DE-OS 33 42 511 zu entnehmen. Mit diesem Sensor 20 sind die in eine Datenspur eingeschriebenen Informationen auszulesen. Er hat eine geringe Dicke $d_3$ von unter 100 nm, typischerweise zwischen etwa 30 bis 70 nm, und unterteilt die Spaltweite G in zwei Teilbereiche mit Weiten g1 und g2. Seine vertikale Ausdehnung $h_3$ wird dabei vorteilhaft etwas geringer als die Größe $h_1$ oder $h_2$ gewählt.

Vorteilhaft können die Magnetschichten der beiden Magnetschenkel 9 und 10 zumindest teilweise aus unterschiedlichen magnetischen Materialien bestehen. Die Materialwahl ist dabei so vorzunehmen, daß während der Schreibfunktion der Magnetpol P2 und mindestens das daran angrenzende Polstück 12 des nachlaufenden Magnetschenkels 10 aufgrund eines in der Schreibspule 18 fließenden Schreibstromes I zumindest teilweise magnetisch gesättigt sind. Auf diese Weise kann erreicht werden, daß der Magnetpol P2 praktisch unwirksam wird und ein sehr steiles Profil der Kurve des sich zwischen den Polen P1 und P2 einstellenden vertikalen Schreibfeldes hervorgerufen wird. Hierzu kann z.B. für die Magnetschicht des vorlaufenden Magnetschenkels 9 ein Material gewählt werden, das eine verhältnismäßig hohe Sättigungsmagnetisierung Ms1 hat. die demgegenüber geringere Sättigungsmagnetisierung des Materials der Magnetschicht des nachlaufenden Magnetschenkels 10 ist dabei mit Ms2 bezeichnet. Die Werte der Sättigungsmagnetisierungen Ms1 und Ms2 sollen sich insbesondere um einen Faktor von mindestens 1,4 unterscheiden. Als Materialien für die Magnetschenkel kommen deshalb insbesondere Legierungen wie z.B. "Permalloy" oder amorphe CoZr- oder CoHf-Legierungen in Frage. Vorteilhaft soll dabei die größere Sättigungsmagnetisierung Ms1 einen Wert über 1000 kA/m, vorzugsweise über 1100 kA/m haben, während der Wert der kleineren Sättigungsmagnetisierung Ms2 beispielsweise unter 900 kA/m, vorzugsweise unter 800 kA/m liegt. So hat "Permalloy z.B. eine Sättigungsmagnetisierung in der Größenordnung von 800 kA/m, während die Sättigungsmagnetisierungen der genannten binären amorphen Materialien in der Größenordnung von 1100 kA/m liegen. Gegebenenfalls kommen auch ternäre, beispielsweise amorphe Legierungen mit hoher Sättigungsmagnetisierung Ms1 in Frage. Dabei können die Sättigungsmagnetisierungen Ms der einzelnen Schichten in bekannter Weise durch die Herstellungsbedingungen oder durch die Wahl der Legierungszusammensetzung beeinflußt werden.

Eine entsprechende Wirkung läßt sich jedoch nicht nur durch Wahl von Materialien mit unterschiedlicher Sättigungsmagnetisierung erreichen. Wie z.B. der genannten EP-A-0 232 505 zu entnehmen ist, kann eine entsprechende Betonung des vorlaufenden Magnetschenkels 9 beim Schreiben auch dadurch gewährleistet werden, daß man die beiden Schenkel 9 und 10 so ausbildet, daß sie unterschiedliches magnetisches Widerstandsverhalten bezüglich des in dem magnetischen Leitkörper 8 erzeugten Flusses zeigen. Unter diesem Aspekt sind unterschiedliche Dicken $d_1$ und $d_2$ für die Magnetschenkel 9 und 10 vorteilhaft. So wird z.B. eine Dicke $d_1$ vorgesehen, die mindestens das 1,5-Fache der Dicke $d_2$ beträgt. Ferner kann herstellungsbedingt für zumindest Teile des nachlaufenden Magnetschenkels 10 ein Material erzeugt werden, das eine geringere reversible Permeabilität hat als das Material des vorlaufenden Magnetschenkels 9. Die Permeabilitäten sollten sich dabei um mindestens einen Faktor 2, vorzugsweise um einen Faktor 4 unterscheiden. Die mut $\mu_r$ bezeichnete größere reversible Permeabilität hat vorteilhaft einen Wert über 1000, vorzugsweise von mindestens 2000. Demgegenüber sollte der Wert der mit $\mu_r'$ bezeichneten geringeren reversiblen Permeabilität unter 1000 liegen. Dementsprechend läßt sich beispielsweise das in der Figur mit 10' bezeichnete Teilstück des Magnetschenkels 10, das, ausgehend von dem Polstück 12, auf die größere Weite w bezüglich des vorlaufenden Magnetschenkels 9 führt, aus einem Material herstellen, dessen Permeabilität $\mu_r'$ kleiner als die Permeabilität $\mu_r$ des Materials der übrigen Teile des Magnetkopfes ist. Ein entsprechender Aufbau eines Magnetkopfes läßt sich in Dünnschicht-Technik verhältnismäßig einfach vornehmen.

Ein entsprechendes konkretes Ausführungsbeispiel eines erfindungsgemäßen Magnetkopfes ist dem Diagramm der Figur 2 zugrundegelegt. Der entsprechende Magnetkopf wies dabei die folgenden Größen auf:

| | |
|---|---|
| Dicke $d_1$ des Magnetpoles P1 | 2 $\mu$m |
| Dicke $d_2$ des Magnetpoles P2 | 1 $\mu$m |
| Vertikale Ausdehnungen $h_1$ = $h_2$ der Polstücke 11 und 12 | 5 $\mu$m |
| Weite G des Spaltes 13 | 0,8 $\mu$m |
| Reversible Permeabilität $\mu_r$ des Leitkörpers 8 mit Ausnahme des Teilstücks 10' | ca. 2000 |
| Reversible Permeabilität $\mu_r'$ des Teilstücks 10' | ca. 400 |
| Flughöhe f | 0,2 $\mu$m |
| Dicke $D_1$ der CoCr-Speicherschicht 6 mit reversibler Permeabilität $\mu_r \approx 1$ | 0,4 $\mu$m |
| Dicke $D_2$ der NiFe-Unterschicht 7 mit reversibler Permeabilität $\mu_r \approx 400$ | 0,5 $\mu$m |
| Ampere-Windungs-Zahl der Schreibspule 18 | 2 A x Windungen |

Unter Zugrundelegung der vorstehend aufgeführten konkreten Werte des Ausführungsbeispieles ist in dem Diagramm die Feldstärke H des von den beiden Magnetpole P1 und P2 erzeugten Magnetfeldes in Abhängigkeit von der in Bewegungsrichtung v weisenden Ausdehnung x des Magnetkopfes wiedergegeben. Dabei sind in dem Diagramm die Konturen dieser Magnetpole nur angedeutet. Die sich ergebende, in Ordinatenrichtung aufgetragene Feldstärke H ist an der Oberfläche des Aufzeichnungsmediums A in Normalenrichtung (y-Richtung) gemessen. Wie aus dem Diagramm zu ersehen ist, weist die Feldstärkekurve $H_y$ ein im wesentlichen dem vorlaufenden Magnetpol P1 zuzuschreibendes ausgeprägtes (positives) Maximum auf, das ganz deutlich das entsprechende (positive) Schaltfeld " $+ H_c$" der Speicherschicht 6 überschreitet. Unter diesem Schaltfeld " $+ H_c$" wird dabei das Magnetfeld verstanden, das gerade ausreicht, um eine Ummagnetisierung in der Speicherschicht 6 zu bewirken. Im Idealfall entspricht dieses Schaltfeld der entsprechenden Koerzitivfeldstärke des Materials der Speicherschicht; im allgemeinen weicht es aber hiervon um einen geringfügigen Faktor ab. In dem Diagramm sei jedoch der Idealfall angenommen, in dem das Schaltfeld gleich der Koerzitivfeldstärke $H_c$ des Materials der Speicherschicht gesetzt ist. Es liegt im allgemeinen zwischen 30 und 60 kA/m. Wie außerdem aus dem Diagramm hervorgeht, zeigt die Feldstärkekurve $H_y$ zwischen dem dem vorlaufenden Magnetpol P1 zuzuschreibenden Scheitelpunkt S1 mit $H_{s1}$ von etwa 130 kA/m und dem Schnittpunkt SP mit dem Schaltfeld " + $H_c$" vorteilhaft einen sehr steilen Verlauf. Dies bedeutet, daß der erfindungsgemäße Magnetkopf mit einer sehr steilen Flanke F der Feldstärkekurve zwi schen den Magnetpolen P1 und P2 schreibt. Außerdem ist aus dem Diagramm die Tatsache ersichtlich, daß ein schreibendes Nachlaufen des Magnetpols P2 praktisch nicht möglich ist. Der diesem Magnetpol zuzuschreibende Verlauf der Feldstärkekurve $H_y$ hat nämlich in deren negativen Scheitelpunkt S2 einen Minimalwert $H_{s2}$ von etwa - 15 kA/m, der ganz wesentlich oberhalb des negativen Schaltfeldes "-$H_c$" liegt. D.h., die Feldstärkekurve $H_y$ erreicht den Wert dieses Schaltfeldes bei weitem nicht. Für die Speicherschicht 6 eines Aufzeichnungsmediums A wird demnach vorteilhaft ein Material gewählt, das eine ein entsprechend hohes Schaltfeld ergebende Koerzitivfeldstärke $H_c$ aufweist. In dem Diagramm ist außerdem durch eine strichpunktierte Linie die Feldstärkekurve $H_x$ der in Bewegungsrichtung v ausgebildeten (longitudinalen) Feldkomponente mit eingetragen.

Gemäß dem Kurvenverlauf des Diagramms der Figur 2 wurde von einem Magnetkopf 2 ausgegangen, dessen Schreibstrom I gerade ein Maximum $H_{s1}$ des Magnetpoles P1 des vorlaufenden Magnetschenkels 9 und ein Minimum $H_{s2}$ des Magnetpoles P2 des nachlaufenden Magnetschenkels 10 hervorruft. Demgegenüber wird bei einem Schreibstrom mit umgekehrter Flußrichtung ein entsprechender, jedoch zur x-Achse gespiegelter Feldverlauf erhalten.

In Figur 3 ist eine weitere Ausführungsform eines erfindungsgemäßen Magnetkopfes in Figur 1 entsprechender Darstellung veranschaulicht und mit 22 bezeichnet. Diese Ausführungsform unterscheidet sich im wesentlichen von der Ausführungsform nach Figur 1 nur dadurch, daß jeder der Magnetschenkel 9 und 10 außerhalb des durch die Polstücke 11 bzw. 12 eingenommenen Bereichs mit einer zusätzliche, verhältnismäßig dicken Magnetschicht 9a bzw. 10a verstärkt ist. Diese zusätzlichen Schichten decken insbesondere den mittleren Bereich 15 mit der Spule 18 ab. Die Dicken dieser Schichten 9a und 10a sind mit $d_4$ bzw. $d_5$ bezeichnet. Diese zusätzlichen Schichten können vorteilhaft zur Beeinflussung des magnetischen Widerstandes in dem mit 28 bezeichneten magnetischen Leitkörper dienen und außerdem auch für eine angestrebte Asymmetrierung des Feldverlaufs des mit dem Magnetkopf 22 zu erzeugenden Schreibfeldes herangezogen werden.

In den Figuren 4 und 5 sind jeweils als Aufsicht schematisch zwei Schritte zur Herstellung von Teilen eines Dünnfilm-Magnetkopfes 2 oder 22 nach der Erfindung veranschaulicht. Gemäß Figur 4 wird zunächst auf dem Substrat 3 der vorlaufende Magnetschenkel 9 mit seinem Polstück 11 ausgebildet. Die Ausdehnung $b_1$ des Polstücks 11 im Polbereich quer zur relativen Bewegungsrichtung des Kopfes legt dabei die Schreibbreite W des Kopfes fest. Diese Breite nimmt mit zunehmender Flußwechseldichte ab. Auf das Polstück 11 wird danach der magneto-resistive Sensor 20 aufgebracht. Seine Breite $b_3$ quer zur relativen Bewegungsrichtung legt dabei die Lesebreite R des Kopfs fest, die abhängig von der Positioniergenauigkeit des Laufwerkes für die Aufzeichnungsplatte kleiner als die minimale Schreibbreite W gewählt wird. Wie aus der Figur ferner ersichtlich ist, wird die vertikale Ausdehnung $h_3$ des Sensors 20 vorteilhaft kleiner als die entsprechende Ausdehnung $h_1$ des Polstücks 11 gewählt. Seitlich aus dem Spalt 13 herausführende Zuleitungen des Sensors 20 sind in der Figur mit 24 und 2 bezeichnet. Wie außerdem in der Figur nur schematisch angedeutet ist, wird auf den Magnetschenkel 9 außerhalb seines Polbereichs die mindestens eine Windung der Schreibspule 18 abgeschieden. Die Anschlußleitungen für diese Schreibspule sind in der Figur weggelassen.

Abweichend von der Darstellung nach Figur 4 ist es technologisch auch möglich, den vorlaufenden Magnetschenkel 9 durch Strukturieren des Substrates 3 so in dem Substrat einzubetten, daß eine nachfolgende Fertigstellung des Magnetkopfes auf einem nahezu völlig ebenen Aufbau stattfinden kann. Dies vereinfacht den weiteren Kopfaufbau erheblich, erhöht die Ausbeute bei der gleichzeitigen Herstellung einer Vielzahl von Köpfen und spart damit entsprechend Kosten.

Auf den in Figur 4 gezeigten Aufbau wird nun, wie in Figur 5 angedeutet sein soll, die mindestens eine Magnetschicht des nachlaufenden Magnetschenkels 10 aufgebracht. Dabei wird gegebenenfalls eine Breite $b_2$ des Magnetpoles P2 bzw. des Polendstücks 12 quer zur relativen Bewegungsrichtung vorgesehen, die einerseits kleiner als die Breite $b_1$ bzw. W des vorlaufenden Magnetschenkels 9, andererseits aber größer als die Breite $b_3$ bzw. R des magneto-resistiven Sensors 20 ist. In der Figur ist ferner ein magnetischer Rückschluß zwischen dem vorlaufenden und dem nachlaufenden Magnetschenkel in einem Verbindungsbereich 16 veranschaulicht, der auf der dem Aufzeichnungsmedium abgewandten Seite des Magnetkopfes liegt. Bei dem so hergestellten Magnetkopf kann es sich z.B. um den in Figur 1 als Längsschnitt gezeigten Magnetkopf 2 handeln.

**Patentansprüche**

1. Dünnfilm-Magnetkopf mit schichtweisem Aufbau, welcher Magnetkopf

   a) über einer Datenspur eines Aufzeichnungsmediums zu führen ist,

   b) einen den magnetischen Fluß führenden, ringkopfähnlichen magnetischen Leitkörper mit zwei Magnetschenkeln enthält, die

   - mit dem Aufzeichnungsmedium zugewandten Polstücken Magnetpole ausbilden, welche bezüglich der relativen Bewegungsrichtung von Magnetkopf und Aufzeichnungsmedium gesehen hintereinander angeordnet und durch einen Spalt vorbestimmter Weite getrennt sind,

   sowie

   - außerhalb des Bereichs ihrer Polstücke einen Zwischenraum begrenzen, durch welchen sich die Windungen einer Schreibspule erstrecken,

   und

   c) einen magneto-resistiven Sensor zur alleinigen Ausübung der Funktion des Lesens von in die Datenspur eingeschriebenen Informationen aufweist, der in dem Spalt zwischen den Polstücken der Magnetschenkel angeordnet ist und eine Ausdehnung quer zur relativen Bewegungsrichtung hat, die kleiner ist als die entsprechende Ausdehnung jedes benachbarten Polstücks,

   **dadurch gekennzeichnet,**

   - daß der magnetische Leitkörper (8, 28) als Dünnfilm-Struktur auf einem nicht-magnetischen Substrat (3) ausgebildet ist,

   - daß der Magnetpol (P1) des in relativer Bewegungsrichtung (v) gesehen vorlaufenden Magnetschenkels (9) eine größere Breite (b1) quer zur Bewegungsrichtung (v) und eine größere Schichtdicke (d1) in Bewegungsrichtung (v) hat als der Magnetpol (P2) des nachlaufenden Magnetschenkels (10),

   - daß für eine senkrechte (vertikale) Datenaufzeichnung während der Schreibfunktion der Magnetpol (P1) des vorlaufenden Magnetschenkels (9) und der Magnetpol (P2) des nachlaufenden Magnetschenkels (10) ein unterschiedliches magnetisches Verhalten aufweisen, wobei zumindest das Polstück (12) des nachlaufenden Magnetschenkels (10) wenigstens teilweise magnetisch gesättigt ist,

   und

   - daß der magneto-resistive Sensor (20) mit seitlich aus dem Spalt (13) herausführenden Zuleitungen (24, 25) versehen ist.

2. Magnetkopf nach Anspruch 1, **dadurch gekennzeichnet,** daß die unterschiedlichen magnetischen Materialien der Magnetschenkel (9, 10) so gewählt sind, daß ein Ummagnetisieren der Speicherschicht (6) des Aufzeichnungsmediums (A) mit der dem Magnetpol (P2) des nachlaufenden Magnetschenkels (10) zuzuordnenden vertikalen Magnetfeldkomponente zumindest weitgehend ausgeschlossen ist.

3. Magnetkopf nach Anspruch 1 oder 2, **dadurch gekennzeichnet,** daß zumindest das Polstück (11) des vorlaufenden Magnetschenkels (9) aus mindestens einer magnetischen Schicht aus einem Material vorbestimmter, verhältnismäßig hoher Sättigungsmagnetisierung (Ms1) besteht und zumindest das Polstück (12) des nachlaufenden Magnetschenkels (10) mindestens eine magnetische Schicht enthält, deren Material eine Sättigungsmagnetisierung (Ms2) aufweist, die um ein vorbestimmtes Maß niedriger als die vergleichsweise hohe Sättigungsmagnetisierung (Ms1) des vorlaufenden Magnetschenkels (9) ist.

4. Magnetkopf nach Anspruch 3, **dadurch gekennzeichnet,** daß das Material des vorlaufenden Magnetschenkels eine Sättigungsmagnetisierung (Ms1) aufweist, deren Wert mindestens um einen Faktor 1,4 größer ist als der Wert der Sättigungsmagnetisierung (Ms2) des Materials des nachlaufenden Magnetschenkels (10).

5. Magnetkopf nach einem der Ansprüche 1 bis 4, **dadurch gekennzeichnet,** daß die Schichtdicke ($d_1$) des Polstücks (11) des vorlaufenden Magnetschenkels (9) um mindestens das 1,5-Fache größer als die Schichtdicke ($d_2$) des Polstücks (12) des nachlaufenden Magnetschenkels (10) ist.

6. Magnetkopf nach einem der Ansprüche 1 bis 5, **dadurch gekennzeichnet,** daß die Magnetschenkel (9, 10) des magnetischen Leitkörpers (8) zumindest teilweise aus Materialien mit unterschiedlicher reversibler Permeabilität ($\mu_r$, $u_r'$) bestehen.

**7.** Magnetkopf nach Anspruch 6, **dadurch gekennzeichnet,** daß das Material des Teilstücks (10') des nachlaufenden Magnetschenkels (10), das an das Polstück (12) dieses Schenkels angrenzt und auf einen größeren Abstand (w) bezüglich des vorlaufenden Magnetschenkels (9) führt, aus dem Material mit der geringeren reversiblen Permeabilität ($\mu_r$') besteht.

**8.** Magnetkopf nach Anspruch 6 oder 7**, dadurch gekennzeichnet,** daß sich die Werte der verschiedenen reversiblen Permeabilitäten ($\mu_r$, $\mu_r$') der beiden Magnetschenkel (9, 10) mindestens um einen Faktor 2, vorzugsweise um mindestens einen Faktor 4 unterscheiden.

**9.** Magnetkopf nach einem der Ansprüche 6 bis 8, **dadurch gekennzeichnet,** daß die vergleichsweise größere reversible Permeabilität ($\mu_r$) größer als 1000, vorzugsweise größer als 2000 ist, und daß die vergleichsweise geringere reversible Permeabilität ($\mu_r$') einen Wert unter 1000 hat.

**10.** Magnetkopf nach einem der Ansprüche 1 bis 9, **dadurch gekennzeichnet,** daß der magneto-resistive Sensor (20) eine Ausdehnung ($h_3$) senkrecht zum Aufzeichnungsmedium (A) hat, die kleiner als die entsprechenden Ausdehnungen ($h_1$, $h_2$) der benachbarten Polstücke (11, 12) ist.

**11.** Magnetkopf nach einem der Ansprüche 1 bis 10, **dadurch gekennzeichnet,** daß der magneto-resistive Sensor (20) eine in (relativer) Bewegungsrichtung (v) zu messende Dicke ($d_3$) hat, die unter 100 nm liegt.

**12.** Magnetkopf nach einem der Ansprüche 1 bis 11, **dadurch gekennzeichnet,** daß mindestens einer der Magnetschenkel (9, 10) des magnetischen Leitkörpers (28) außerhalb des Bereichs seines Polstückes (11 bzw. 12) mindestens eine zusätzliche Magnetschicht (9a bzw. 10a) aufweist.

**13.** Magnetkopf nach einem der Ansprüche 1 bis 12, **dadurch gekennzeichnet,** daß die Speicherschicht (6) des zuzuordnenden Aufzeichnungsmediums (A) aus einem Material besteht, dessen Koerzitivfeldstärke ($H_c$) einen absoluten Wert von mindestens 20 kA/m, vorzugsweise mindestens 40 kA/m hat.

**14.** Magnetkopf nach einem der Ansprüche 1 bis 13, **dadurch gekennzeichnet,** daß die Speicherschicht (6) des zuzuordnenden Aufzeichnungsmediums (A) auf einer Unterschicht (7) aus einem weichmagnetischen Material angeordnet ist.

**Claims**

**1.** Thin-film magnetic head with layered construction, which magnetic head
a) is to be guided over a data track of a recording medium,
b) contains a magnetic control body guiding the magnetic flux and being similar to an annular head, with two magnetic limbs, which
- form with pole pieces facing the recording medium magnetic poles which are arranged behind one another when seen with respect to the relative direction of movement of magnetic head and recording medium and are separated by a gap of predetermined width,
and
- outside the region of their pole pieces limit a space through which the turns of a writing coil extend,
and
c) has a magneto-resistive sensor for the sole execution of the function of reading information written into the data track, which is arranged in the gap between the pole pieces of the magnetic limbs and has an extension at right angles to the relative direction of movement, which is smaller than the corresponding extension of each adjacent pole piece,
characterized in that
- the magnetic control body (8, 28) is formed as thin-film structure on a non-magnetic substrate (3),
- the magnetic pole (P1) of the magnetic limb (9) which precedes when seen in the relative direction of movement (v) has a greater width (b1) at right angles to the direction of movement (v) and a greater layer thickness (d1) in the direction of movement (v) than the magnetic pole (P2) of the following magnetic limb (10),
- for a perpendicular (vertical) data-recording during the writing function the magnetic pole (P1) of the preceding magnetic limb (9) and the magnetic pole (P2) of the following magnetic limb (10) have a different magnetic behaviour, whereby at least the pole piece (12) of the following magnetic limb (10) is at least partially magnetically saturated,

and

- the magneto-resistive sensor (20) is provided with supply lines (24, 25) which lead laterally out of the gap (13).

2. Magnetic head according to claim 1, characterized in that the different magnetic materials of the magnetic limbs (9, 10) are chosen such that a magnetic reversal of the memory layer (6) of the recording medium (A) with the vertical magnetic-field component to be associated with the magnetic pole (P2) of the following magnetic limb (10) is excluded at least to a large extent.

3. Magnetic head according to claim 1 or 2, characterized in that at least the pole piece (11) of the preceding magnetic limb (9) consists of at least one magnetic layer of a material of predetermined, relatively high saturation magnetization (Ms1) and at least the pole piece (12) of the following magnetic limb (10) contains at least one magnetic layer, the material of which has a saturation magnetization (Ms2) which is lower than the comparatively high saturation magnetization (Ms1) of the preceding magnetic limb (9) by a predetermined extent.

4. Magnetic head according to claim 3, characterized in that the material of the preceding magnetic limb has a saturation magnetization (Ms1), the value of which is greater than the value of the saturation magnetisation (Ms2) of the material of the following magnetic limb (10) by at least a factor 1.4.

5. Magnetic head according to one of claims 1 to 4, characterized in that the layer thickness ($d_1$) of the pole piece (11) of the preceding magnetic limb (9) is at least 1.5 times greater than the layer thickness ($d_2$) of the pole piece (12) of the following magnetic limb (10).

6. Magnetic head according to one of claims 1 to 5, characterized in that the magnetic limbs (9, 10) of the magnetic control body (8) consist at least in part of materials with different reversible permeability ($\mu_r$, $\mu_r'$).

7. Magnetic head according to claim 6, characterized in that the material of the partial piece (10') of the following magnetic limb (10), which joins the pole piece (12) of this limb and leads on to a greater distance (w) with respect to the preceding magnetic limb (9), consists of the material with the lesser reversible permeability ($u_r'$).

8. Magnetic head according to claim 6 or 7, characterized in that the values of the different reversible permeabilities ($\mu_r$, $u_r'$) of the two magnetic limbs (9, 10) differ at least by a factor 2, preferably by at least a factor 4.

9. Magnetic head according to one of claims 6 to 8, characterized in that the comparatively greater reversible permeability ($\mu_r$) is greater than 1000, preferably greater than 2000, and that the comparatively lesser reversible permeability ($\mu_r'$) has a value below 1000.

10. Magnetic head according to one of claims 1 to 9, characterized in that the magneto-resistive sensor (20) has an extension ($h_3$) perpendicular to the recording medium (A), which is smaller than the corresponding extensions ($h_1$, $h_2$) of the adjacent pole pieces (11, 12).

11. Magnetic head according to one of claims 1 to 10, characterized in that the magneto-resistive sensor (20) has a thickness ($d_3$) to be measured in (relative) direction of movement (v), which lies below 100 nm.

12. Magnetic head according to one of claims 1 to 11, characterized in that at least one of the magnetic limbs (9, 10) of the magnetic control body (28) outside the region of its pole piece (11 or 12) has at least one additional magnetic layer (9a or 10a).

13. Magnetic head according to one of claims 1 to 12, characterized in that the memory layer (6) of the recording medium (A) to be allocated consists of a material, the coercive field strength ($H_c$) of which has an absolute value of at least 20 kA/m, preferably at least 40 kA/m.

**14.** Magnetic head according to one of claims 1 to 13, characterized in that the memory layer (6) of the recording medium (A) to be allocated is arranged on a bottom layer (7) made of a soft-magnetic material.

**Revendications**

1. Tête magnétique à pellicule mince possédant une structure à couches, laquelle tête magnétique
   a) doit être guidée au-dessus d'une piste de données d'un support d'enregistrement,
   b) comporte un corps conducteur magnétique, qui guide le flux magnétique et a la forme d'une tête annulaire à deux branches magnétiques, qui
      - forment, avec les pièces polaires tournées vers le support d'enregistrement, des pôles magnétiques qui sont disposés l'un derrière l'autre par rapport au sens du déplacement relatif de la tête magnétique et du support d'enregistrement et sont séparés par une fente de largeur prédéterminée, et
      - limitent, à l'extérieur de la zone de leurs pièces polaires, un espace intermédiaire, à travers lequel s'étendent les spires d'une bobine d'enregistrement, et
   c) possède un capteur magnétorésistif servant à exercer uniquement la fonction de lecture d'informations enregistrées sur la piste de données, et qui est disposé dans la fente située entre les pièces polaires des branches magnétiques et possède une étendue dans le sens transversal par rapport à la direction de déplacement relatif, qui est inférieure à l'étendue correspondante de chaque pièce polaire voisine,
   caractérisée par le fait
      - que le corps conducteur magnétique (8,28) est agencé sous la forme d'une structure à pellicule mince sur un substrat amagnétique (3),
      - que le pôle magnétique (P1) de la branche magnétique (9), qui est situé en avant dans la direction du déplacement relatif (v), possède une largeur (b1), comptée transversalement par rapport à la direction de déplacement (v), et une épaisseur de couche ($d_1$), comptée dans la direction de déplacement (v), supérieures à celles du pôle magnétique (P2) de la branche magnétique arrière (10),
      - que pour un enregistrement perpendiculaire (vertical) de données, pendant la fonction d'enregistrement, le pôle magnétique (P1) de la branche magnétique avant (9) et le pôle magnétique (F2) de la branche magnétique arrière (10) possèdent des comportements magnétiques différents, au moins la pièce polaire (12) de la branche magnétique arrière (10) étant saturée au moins partiellement magnétiquement, et
      - que le capteur magnétorésistif (20) est pourvu de conducteurs d'alimentation (24,25), qui ressortent latéralement de la fente (13).

2. Tête magnétique suivant la revendication 1, caractérisée par le fait que les différents matériaux magnétiques des branches magnétiques (9,10) sont choisis de telle sorte qu'une inversion de l'aimantation de la couche de mémoire (6) du support d'enregistrement (A) par la composante verticale de champ magnétique, qui doit être associée au pôle magnétique (P2) de la branche magnétique arrière (10), est exclue, au moins dans une large mesure.

3. Tête magnétique suivant la revendication 1 ou 2, caractérisée par le fait qu'au moins la pièce polaire (11) de la branche magnétique avant (9) est constituée par au moins une couche magnétique réalisée en un matériau possédant une aimantation de saturation prédéterminée (Ms1), comparativement élevée, et qu'au moins la pièce polaire (12) de la branche magnétique arrière (10) comporte au moins une couche magnétique, dont le matériau possède une aimantation de saturation (Ms2), qui est inférieure, d'une valeur prédéterminée, à l'aimantation de saturation comparativement élevée (Ms1) de la branche magnétique avant (9).

4. Tête magnétique suivant la revendication 3, caractérisée par le fait que le matériau de la branche magnétique avant possède une aimantation de saturation (Ms1), dont la valeur est supérieure, au moins d'un facteur 1,4, à la valeur de l'aimantation de saturation (Ms2) du matériau de la branche magnétique arrière (10).

5. Tête magnétique suivant l'une des revendications 1 à 4, caractérisée par le fait que l'épaisseur ($d_1$) de la couche de la pièce polaire (11) de la branche magnétique avant (9) est supérieure, au moins du facteur 1,5, à l'épaisseur ($d_2$) de la couche de la pièce polaire (12) de la branche magnétique arrière (10).

6. Tête magnétique suivant l'une des revendications 1 à 5, caractérisée par le fait que les branches magnétiques (9,10) du corps conducteur magnétique (8) sont constituées au moins en partie par des matériaux possédant une perméabilité réversible différente ($\mu_r$, $\mu_r'$).

7. Tête magnétique suivant la revendication 6, caractérisée par le fait que le matériau de l'élément partiel (10') de la branche magnétique arrière (10), qui est contigu à la pièce polaire (12) de cette branche, et conduit à une distance accrue (w) par rapport à la branche magnétique avant (9), est constitué par le matériau possédant la perméabilité réversible plus faible ($\mu_r'$).

8. Tête magnétique suivant la revendication 6 ou 7, caractérisée par le fait que les valeurs des différentes perméabilités réversibles ($\mu_r$, $\mu_r'$) des deux branches magnétiques (9,10) diffèrent au moins d'un facteur 2, et de préférence au moins d'un facteur 4.

9. Tête magnétique suivant l'une des revendications 6 à 8, caractérisé par le fait que la perméabilité réversible comparativement plus grande ($\mu_r$) est supérieure à 1000 et de préférence supérieure à 2000, et que la perméabilité réversible comparativement plus faible ($\mu_r'$) possède une valeur inférieure à 1000.

10. Tête magnétique suivant l'une des revendications 1 à 9, caractérisée par le fait que le capteur magnétorésistif (20) possède une étendue ($h_3$), perpendiculairement au support d'enregistrement (A), qui est inférieure aux étendues correspondantes ($h_1$, $h_2$) des pièces polaires voisines (11, 12).

11. Tête magnétique suivant l'une des revendications 1 à 10, caractérisée par le fait que le capteur magnétorésistif (20) possède une épaisseur ($d_3$), à mesurer dans la direction de déplacement (relatif) (v), qui est inférieure à 100 nm.

12. Tête magnétique suivant l'une des revendications 1 à 11, caractérisée par le fait qu'au moins l'une des branches magnétiques (9,10) du corps conducteur magnétique (28), possède, à l'extérieur de la zone de sa pièce polaire (11 ou 12), au moins une couche supplémentaire (9a ou 10a).

13. Tête magnétique suivant l'une des revendications 1 à 12, caractérisée par le fait que la couche de mémoire (6) du support d'enregistrement (A) devant être associé, est réalisée en un matériau dont l'intensité de champ coercitif ($H_c$) possède une valeur absolue égale à au moins 20 kA/m et de préférence égale au moins à 40 kA/m.

14. Tête magnétique suivant l'une des revendications 1 à 13, caractérisée par le fait que la couche de mémoire (6) du support d'enregistrement (A) devant être associé est disposée sur une sous-couche (7) réalisée en un matériau magnétique doux.

FIG 1

FIG 3

FIG 2

FIG 4

14

FIG 5